# EUROPEAN PATENT SPECIFICATION

(11) **EP 3 880 039 B1**
(45) Date of publication and mention of the grant of the patent: **08.06.2022**
(21) Application number: 19780236.6
(22) Date of filing: 30.09.2019
(51) Int. Cl.: A47J 31/057, A47J 31/06, A47J 31/52

(54) **A HOT BEVERAGE PREPARATION MACHINE**
MASCHINE ZUR ZUBEREITUNG HEISSER GETRÄNKE
MACHINE DE PRÉPARATION DE BOISSONS CHAUDES

(30) Priority: 12.11.2018 TR 201817006
(43) Date of publication of application: 22.09.2021
(73) Proprietor: Arçelik Anonim Sirketi, 34445 Istanbul (TR)
(72) Inventor: TOSUN, Isa, 34950 ISTANBUL (TR); OZTURK, Tansel, 34950 ISTANBUL (TR); MUTLUDOGAN, Mehmet, 34950 ISTANBUL (TR); KAYISDAG, Varol, 34950 ISTANBUL (TR); OZBEK, Hale, 34950 ISTANBUL (TR)
(86) International application number: PCT/EP2019/076470
(87) International publication number: WO 2020/099019

(56) References cited:
- WO-A1-2016/078858
- WO-A2-2015/016792
- US-A1- 2010 206 176
- US-A1- 2018 220 832

## Description

The present invention relates to a hot beverage preparation machine for automatically preparing beverages.

In hot beverage preparation machines, the water filled into the water reservoir is heated by a water heater and is transferred to the brewing chamber containing raw beverage material to be prepared. The brewing process is performed in the brewing chamber as a result of the interaction between the raw beverage material and water. The brewed beverage is afterwards transferred into a pot and served. The period of time the raw beverage material interacts with the water is one of the important parameters which defines the brew strength, hence the taste of the beverage. In the state of the art, machines are known which carry out brewing process for certain periods of time as per user selection. After staying in the brewing chamber for a certain period of time, the beverage is transferred into the pot. Electronic valves are used for transferring the water into the pot. Due to accumulation of beverage residues on the valve in the course of time, some beverage may remain in the brewing chamber. Since the user cannot access the electronic valves, the cleaning process cannot be carried out, and as some old beverage remains in the brewing chamber, hygiene problems such as mold, etc. may arise. This situation causes user dissatisfaction.

In the state of the art International Patent Application No. WO2008049163, a tea maker is disclosed, wherein the pulp of the used beverage material is removed from the brewing chamber. Document US 2010/206176 A1 discloses a hot beverage preparation machine comprising a body; a water reservoir which is placed onto the body and wherein the brewing water is heated; a brewing chamber wherein the brewing process is performed as a result of the interaction between raw beverage material and water; a housing which is situated on the body; and a pot which is situated on the housing so as to allow the beverage brewed in the brewing chamber to be distilled therein. When the brewing process is completed, the hot beverage is distilled from the brewing chamber to the pot and separated from the raw beverage material. An actuation mechanism provides the delivery of the beverage to the pot.

The aim of the present invention is the realization of a hot beverage preparation machine which provides ease of use and cleaning.

The hot beverage preparation machine realized in order to attain the aim of the present invention and explicated in the claims, comprises a body; a water reservoir which is placed onto the body and wherein the brewing water is heated; a brewing chamber wherein the brewing process is performed as a result of the interaction between raw beverage material and water; a housing which is situated on the body; and a pot which is situated on the housing so as to allow the beverage brewed in the brewing chamber to be distilled therein. When the brewing process is completed, the hot beverage is distilled from the brewing chamber to the pot and separated from the raw beverage material. Thus, the taste of the beverage obtained momentarily during the brewing process is kept for a longer time and the beverage is prevented from getting stale.

The hot beverage preparation machine of the present invention comprises an actuation mechanism which provides the delivery of the beverage to the pot, and a safety member which controls the flow of the beverage when the pot is taken out of the housing. By means of the safety member, when the pot is taken out of the housing, the flow of the beverage from the brewing chamber is interrupted. Thus, the safety of the user is ensured. The mechanical beverage flow system enables the user to access the components, facilitating the cleaning process.

The hot beverage preparation machine comprises a flow control member which controls the flow of the beverage from the brewing chamber. The flow control member is connected to the movement arm with the other end being connected to a motor and a cam. The movement arm is connected to the body by means of a connection point. The connection point moves in the vertical plane by means of the safety member. Thus, when the pot is taken out of the housing, the beverage in the brewing chamber is prevented from being discharged.

In an embodiment of the present invention, the hot beverage preparation machine comprises the actuation mechanism which shifts to the open position as the flow control member moves into the brewing chamber. When the actuation mechanism is in the open position, the brewed beverage is transferred into the pot.

In an embodiment of the present invention, the hot beverage preparation machine comprises a spring which is provided on the flow control member and the actuation mechanism which shifts to the closed position as the flow control member moves downwards upon the movement of the movement arm towards the housing by means of the spring. When the actuation mechanism is in the closed position, the flow of beverage from the brewing chamber into the pot is interrupted.

In an embodiment of the present invention, the hot beverage preparation machine comprises the flow control member having a container, at least one opening arranged on the base of the container, and a plug extending towards the brewing chamber in a manner perpendicular to the base of the container.

In an embodiment of the present invention, the actuation mechanism comprises the cam which rotates to enable the flow control member to move in the vertical plane by means of the circular movement from the connection point of the movement arm. The cam is energized by means of the motor.

In an embodiment of the present invention, the hot beverage preparation machine comprises the movement arm of which the end in contact with the flow control member is U-shaped.

By means of the present invention, a hot beverage preparation machine is realized, wherein the flow of the beverage into the pot is mechanically controlled.

The hot beverage preparation machine realized in order to attain the aim of the present invention is illustrated in the attached figures, where:

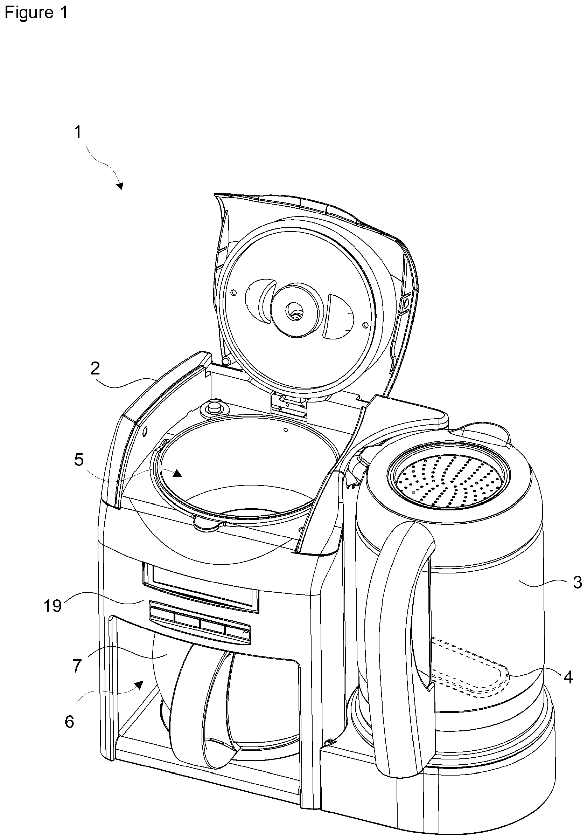

Figure 1 - is the perspective view of the hot beverage preparation machine.

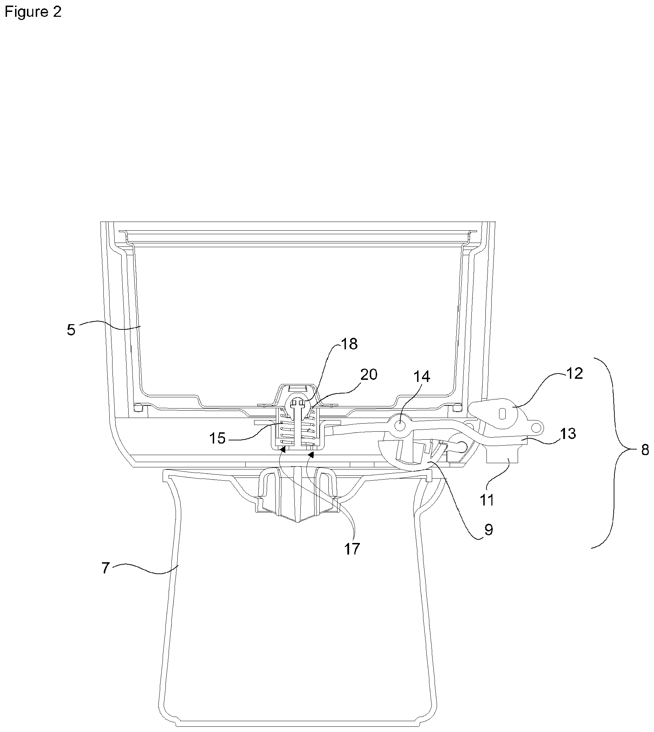

Figure 2 - is the schematic view of the brewing chamber, the pot and the actuation mechanism.

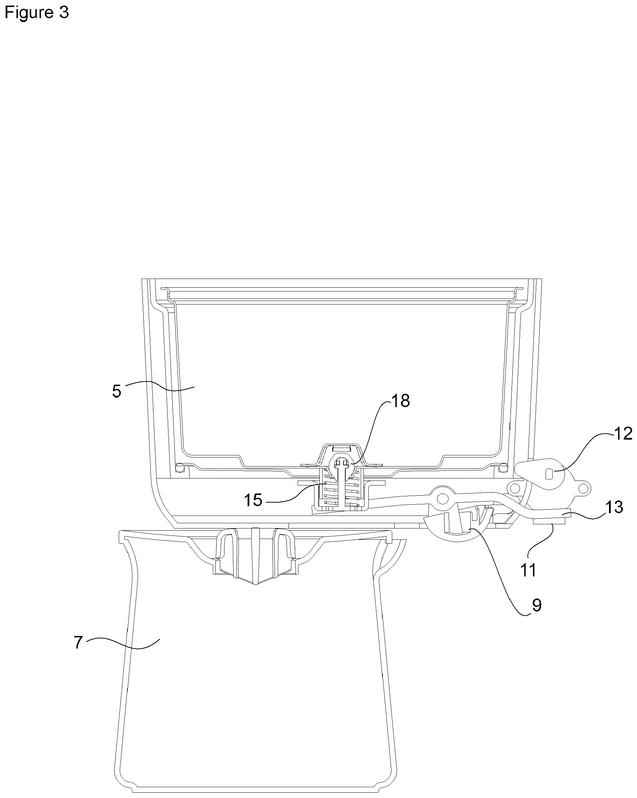

Figure 3 - is the schematic view of the brewing chamber, the pot and the actuation mechanism when the pot is not under the brewing chamber.

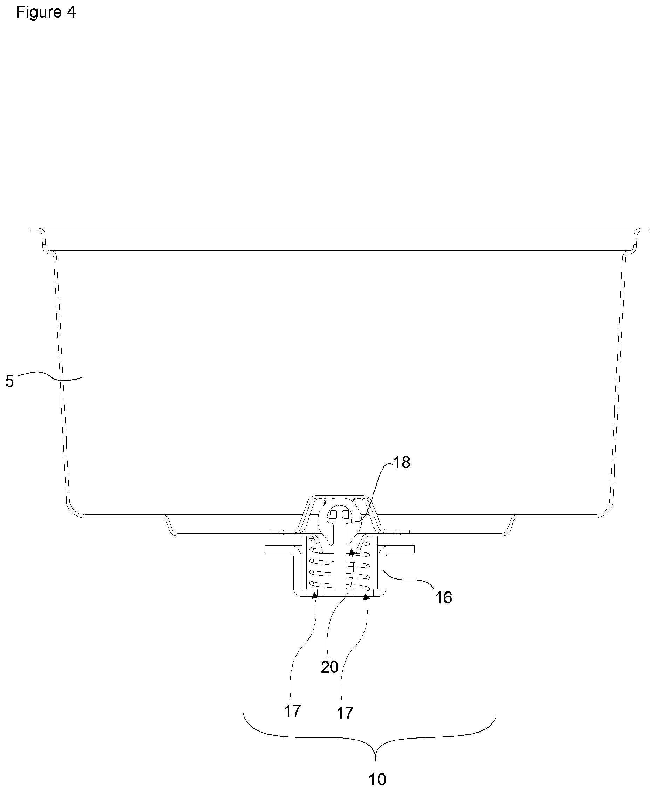

Figure 4 - is the schematic view of the brewing chamber and the flow control member.

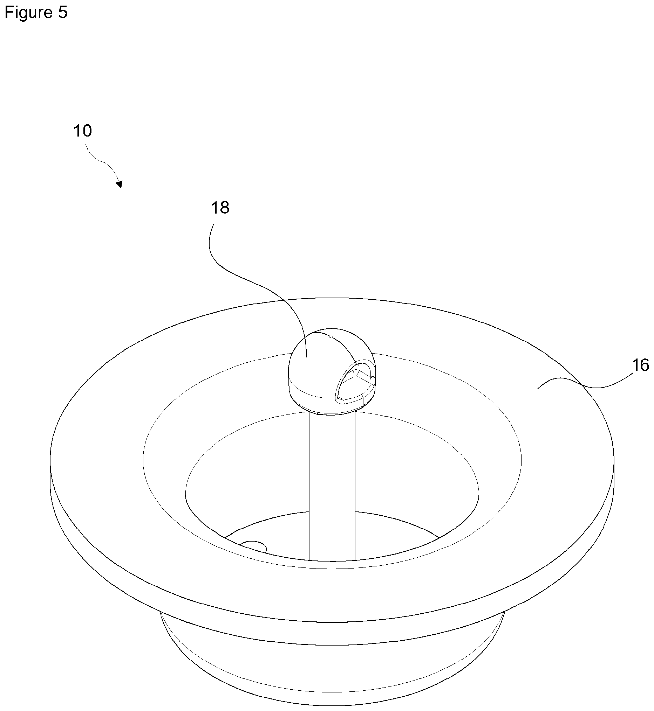

Figure 5 - is the perspective view of the flow control member.

The elements illustrated in the figures are numbered as follows:
- 1.: Hot beverage preparation machine
- 2.: Body
- 3.: Water reservoir
- 4.: Water heater
- 5.: Brewing chamber
- 6.: Housing
- 7.: Pot
- 8.: Actuation mechanism
- 9.: Safety member
- 10.: Flow control member
- 11.: Motor
- 12.: Cam
- 13.: Movement arm
- 14.: Connection point
- 15.: Spring
- 16.: Container
- 17.: Opening
- 18.: Plug
- 19.: Control unit
- 20.: Hole

The hot beverage preparation machine (1) comprises a body (2); a water reservoir (3) wherein water is filled; a water heater (4) enabling the water in the water reservoir (3) to be heated; a brewing chamber (5) wherein the raw material of the beverage to be prepared is put and whereto the water heated in the water reservoir (3) is transferred, wherein the brewing process is performed as a result of the interaction between the raw beverage material and water; a housing (6) which is situated on the body (2), under the brewing chamber (5); a pot (7) which is placed into the housing (6), the top surface thereof being at least partially open and whereto the beverage brewed in the brewing chamber (5) is transferred; and an actuation mechanism (8) which controls the delivery of the beverage brewed in the brewing chamber (5) into the pot (7). The raw material of the beverage is put into the brewing chamber (5) by the user. By taking the water boiled by means of the water heater (4) into the brewing chamber (5), the beverage is brewed for a period of time. The prepared beverage at the completion of the brewing process is transferred from the brewing chamber (5) into the pot (7). By means of the actuation mechanism (8), the beverage brewed in the brewing chamber (5) is transferred into the pot (7).

The hot beverage preparation machine (1) of the present invention comprises the actuation mechanism (8) comprising a safety member (9) which triggers the actuation mechanism (8) when the pot (7) is taken out of the housing (6) so as to prevent the beverage from being discharged from the brewing chamber (5); a flow control member (10) which controls the flow of the beverage from the brewing chamber (5); a movement arm (13) with one end connected to the flow control member (10) and the other end to a motor (11) and a cam (12); a connection point (14) which enables the movement arm (13) to stay fixed on the body and to make circular movement; and the safety member (9) which enables the connection point (14) to move in the vertical plane. By means of the safety member (9), when the pot (7) is taken out of the housing (6), the beverage is prevented from being discharged from the brewing chamber (5).

By means of the flow control member (10), the beverage in the brewing chamber (5) reaches the pot (7) or the beverage is prevented from reaching the pot (7). The flow control member (10) is controlled by means of the movement arm (13). The movement arm (13) moves by means of the cam energized by the motor (11). If the pot (7) is not in the housing (6) when the movement arm (13) is moved by the cam (12), the safety member (9) interrupts the flow by enabling the movement arm (13) to move. The discharge of the beverage from the brewing chamber (5) is controlled by means of mechanical components. Thus, the access of the user to the components so as to clean the same is facilitated.

In an embodiment of the present invention, the hot beverage preparation machine (1) comprises an open position wherein the movement arm (13) moves upwards with the upwards movement of the safety member (9) when the pot (7) is on the body (2) and thus the flow control member (10) moves into the brewing chamber (5) so as to allow the beverage to flow from the brewing chamber (5) into the pot (7). When the actuation mechanism (8) is in the open position, the flow control member (10) moves into the pot (7) and allows the beverage to flow from the brewing chamber (5) into the pot (7).

In an embodiment of the present invention, the hot beverage preparation machine (1) comprises a spring (15) which is arranged on the flow control member (10) and which enables the safety member (9) and the movement arm (13) to move downwards when the pot (7) is not on the body (2), and a closed position wherein the flow control member (10) moves towards the base of the brewing chamber (5) so as to interrupt the beverage flow into the pot (7). When the actuation mechanism (8) is in the closed position, the flow control member (10) moves towards the base of the brewing chamber (5). Thus, the beverage flow is interrupted. By means of the spring (15) mounted onto the flow control member (10), the actuation members (8) tends to continuously shift to the closed position. Thus, the hot beverage is prevented from being scattered, providing user safety.

In an embodiment of the present invention, the hot beverage preparation machine (1) comprises the flow control member (10) having a container (16), at least one opening (17) arranged on the base of the container (16), and a plug (18) contacting the base of the container (16) perpendicularly, and the actuation mechanism (8) comprising a hole (20) arranged on the base of the brewing chamber (5) and through which the plug (18) passes. The flow control member (10) comprises the container (16) and the plug (18) which extends from the center of the container (16) towards the brewing chamber (5). When the actuation mechanism (8) is in the closed position, the plug (18) is seated onto the hole (20). Thus, the flow of the beverage is prevented. When the actuation mechanism (8) shifts to the open position, the plug (18) moves towards the brewing chamber (5), thus enabling the beverage to be delivered into the container (16) and into the pot (7) through the openings (17) on the container (16).

In an embodiment of the present invention, the hot beverage preparation machine (1) comprises the actuation mechanism (8) comprises the cam (12) which rotates by means of the motor (11) to enable the flow control member (10) to move in the vertical plane by means of the circular movement from the connection point (14) of the movement arm (13). The cam (12) energized by the motor (11) rotates to enable the movement arm (13) to make circular movement. As an alternative to the cam (12) mechanism, systems such as linear motor (11), solenoid, pinion-toothed rack, etc. can be used.

In an embodiment of the present invention, the hot beverage preparation machine (1) comprises a control unit (19) which enables the beverage to be brewed for a period of time predetermined by the producer and which, at the completion of the brewing process, enables the cam (12) to be energized by means of the motor (11) such that the beverage is transferred into the pot (7). The control unit (19), which enables the beverage to be brewed for a period of time predetermined by the producer, stops the motor (11) and the brewing process.

In an embodiment of the present invention, the hot beverage preparation machine (1) comprises the actuation mechanism (8) having the movement arm (13) of which one end is U-shaped. One end of the movement arm (13) can be U-shaped or circular. Thus, the container (16) is peripherally enclosed.

By means of the present invention, a hot beverage preparation machine (1) is realized, wherein the brewed beverage is transferred into the pot (7) by means of mechanical components. Thus, the user can access and efficiently clean the components.

## Claims

1. A hot beverage preparation machine (1) comprising
- a body (2);
- a water reservoir (3) wherein water is filled;
- a water heater (4) enabling the water in the water reservoir (3) to be heated;
- a brewing chamber (5) wherein the raw material of the beverage to be prepared is put and whereto the water heated in the water reservoir (3) is transferred, wherein the brewing process is performed as a result of the interaction between the raw beverage material and water;
- a housing (6) which is situated on the body (2), under the brewing chamber (5);
- a pot (7) which is placed into the housing (6), the top surface thereof being at least partially open and whereto the beverage brewed in the brewing chamber (5) is transferred; and
- an actuation mechanism (8) which controls the delivery of the beverage brewed in the brewing chamber (5) into the pot (7),
**characterized by** the actuation mechanism (8) comprising
- a safety member (9) which triggers the actuation mechanism (8) when the pot (7) is taken out of the housing (6) so as to prevent the beverage from being discharged from the brewing chamber (5);
- a flow control member (10) which controls the flow of the beverage from the brewing chamber (5); a movement arm (13) with one end connected to the flow control member (10) and the other end to a motor (11) and a cam (12); a connection point (14) which enables the movement arm (13) to stay fixed on the body and to make circular movement; and the safety member (9) which enables the connection point (14) to move in the vertical plane.

2. A hot beverage preparation machine (1) as in Claim 1, **characterized by** an open position wherein the movement arm (13) moves upwards with the upwards movement of the safety member (9) when the pot (7) is on the body (2) and thus the flow control member (10) moves into the brewing chamber (5) so as to allow the beverage to flow from the brewing chamber (5) into the pot (7).

3. A hot beverage preparation machine (1) as in any one of the above claims, **characterized by** a spring (15) which is arranged on the flow control member (10) and which enables the safety member (9) and the movement arm (13) to move downwards when the pot (7) is not on the body (2), and a closed position wherein the flow control member (10) moves towards the base of the brewing chamber (5) so as to interrupt the beverage flow into the pot (7).

4. A hot beverage preparation machine (1) as in any one of the above claims, **characterized by** the flow control member (10) having a container (16), at least one opening (17) arranged on the base of the container (16), and a plug (18) contacting the base of the container (16) perpendicularly, and the actuation mechanism (8) comprising a hole (20) arranged on the base of the brewing chamber (5) and through which the plug (18) passes.

5. A hot beverage preparation machine (1) as in any one of the above claims, **characterized by** the actuation mechanism (8) comprising the cam (12) which rotates by means of the motor (11) to enable the flow control member (10) to move in the vertical plane by means of the circular movement from the connection point (14) of the movement arm (13).

6. A hot beverage preparation machine (1) as in any one of the above claims, **characterized by** a control unit (19) which enables the beverage to be brewed for a period of time predetermined by the producer and which, at the completion of the brewing process, enables the cam (12) to be energized by means of the motor (11) such that the beverage is transferred into the pot (7).

7. A hot beverage preparation machine (1) as in any one of the above claims, **characterized by** the actuation mechanism (8) comprising the movement arm (13) of which one end is U-shaped.

## Patentansprüche

1. Eine Heißgetränkezubereitungsmaschine (1) **umfasst**
- einen Körper (2);
- einen Wasserbehälter (3), in dem Wasser gefüllt wird;
- einen Wassererhitzer (4), der es ermöglicht, das Wasser im Wasserbehälter (3) zu erhitzen;
- eine Brühkammer (5), in die der Rohstoff des zuzubereitenden Getränks gegeben wird und in die das im Wasserbehälter (3) erhitzte Wasser überführt wird, wobei der Brühprozess als Ergebnis der Wechselwirkung zwischen dem Getränkerohmaterial und Wasser durchgeführt wird;
- ein Gehäuse (6), das sich auf dem Körper (2) unter der Brühkammer (5) befindet
- eine in das Gehäuse (6) eingesetzte Kanne (7), dessen Oberseite zumindest teilweise offen ist und in die das in der Brühkammer (5) gebrühte Getränk überführt wird; und
- einen Betätigungsmechanismus (8), der die Abgabe des in der Brühkammer (5) gebrühten Getränks in die Kanne (7) steuert,
der Betätigungsmechanismus (8) **ist dadurch gekennzeichnet, dass** er folgendes umfasst
- ein Sicherheitselement (9), das den Betätigungsmechanismus (8) auslöst, wenn die Kanne (7) aus dem Gehäuse (6) genommen wird, um zu verhindern, dass das Getränk aus der Brühkammer (5) austritt;
- ein Strömungssteuerelement (10), das den Getränkestrom aus der Brühkammer (5) steuert; einen Bewegungsarm (13), dessen eines Ende mit dem Strömungssteuerelement (10) und das andere Ende mit einem Motor (11) und einem Nocken (12) verbunden ist; einen Verbindungspunkt (14), der es dem Bewegungsarm (13) ermöglicht, fest am Körper zu bleiben und eine kreisförmige Bewegung auszuführen; und das Sicherheitselement (9), das es dem Verbindungspunkt (14) ermöglicht, sich in der vertikalen Ebene zu bewegen.

2. Eine Heißgetränkezubereitungsmaschine (1), wie in Anspruch 1 aufgeführt, **ist dadurch gekennzeichnet, dass** eine offene Position, in der sich der Bewegungsarm (13) mit der Aufwärtsbewegung des Sicherheitselements (9) nach oben bewegt, wenn sich die Kanne (7) auf dem Körper (2) befindet und sich somit das Strömungssteuerelement (10) in die Brühkammer (5) bewegt um das Getränk aus der Brühkammer (5) in die Kanne (7) fließen zu lassen.

3. Eine Heißgetränkezubereitungsmaschine (1), wie in einem der vorherigen Ansprüchen aufgeführt, **ist dadurch gekennzeichnet, dass** eine Feder (15) auf dem Strömungssteuerelement (10) angeordnet ist und es dem Sicherheitselement (9) und dem Bewegungsarm (13) ermöglicht, sich nach unten zu bewegen, wenn sich der Topf (7) nicht auf dem Körper (2) befindet, und eine geschlossene Position, in der sich das Strömungssteuerelement (10) zum Boden der Brühkammer (5) hin bewegt, um den Getränkefluss in die Kanne (7) zu unterbrechen.

4. Eine Heißgetränkezubereitungsmaschine (1), wie in einem der vorherigen Ansprüchen aufgeführt, **ist dadurch gekennzeichnet, dass** das Strömungssteuerelement (10) einen Behälter (16), mindestens eine Öffnung (17), die an der Basis des Behälters (16) angeordnet ist, und einen Stöpsel (18), der die Basis des Behälters (16) senkrecht berührt, aufweist, wobei der Betätigungsmechanismus (8) ein Loch (20) umfasst, das am Boden der Brühkammer (5) angeordnet ist und durch das der Stöpsel (18) hindurchgeht.

5. Eine Heißgetränkezubereitungsmaschine (1), wie in einem der vorherigen Ansprüchen aufgeführt, **ist dadurch gekennzeichnet, dass** der Betätigungsmechanismus (8) den Nocken (12) umfasst, der sich mittels des Motors (11) dreht, um zu ermöglichen, dass sich das Strömungssteuerelement (10) in der vertikalen Ebene mittels der kreisförmigen Bewegung von dem Verbindungspunkt (14) des Bewegungsarms (13) bewegt.

6. Eine Heißgetränkezubereitungsmaschine (1), wie in einem der vorherigen Ansprüchen aufgeführt, **ist dadurch gekennzeichnet, dass** eine Steuereinheit (19), die das Aufbrühen des Getränks für eine vom Hersteller vorgegebene Zeitdauer ermöglicht und die nach Beendigung des Brühvorgangs die Betätigung des Nockens (12) mittels des Motors (11) ermöglicht, so dass das Getränk in die Kanne (7) überführt wird.

7. Eine Heißgetränkezubereitungsmaschine (1), wie in einem der vorherigen Ansprüchen aufgeführt, **ist dadurch gekennzeichnet, dass** der Betätigungsmechanismus (8) den Bewegungsarm (13) umfasst, dessen eines Ende U-förmig ist.

## Revendications

1. Machine de préparation de boissons chaudes (1) **comprenant**
- un corps (2);
- un réservoir d'eau (3) dans lequel l'eau est remplie ;
- un chauffe-eau (4) permettant de chauffer l'eau du réservoir d'eau (3) ;
- une chambre d'infusion (5) dans laquelle la matière première de la boisson à préparer est placée et dans laquelle l'eau chauffée dans le réservoir d'eau (3) est transférée, dans laquelle le processus d'infusion est effectué suite à l'interaction entre la matière première de boisson et de l'eau;
- un boitier (6) situé sur le corps (2), sous la chambre d'infusion (5) ;
- un pot (7) placé dans le boîtier (6), la surface supérieure de celui-ci étant au moins partiellement ouverte et vers laquelle la boisson infusée dans la chambre d'infusion (5) est transférée ; et
- un mécanisme d'actionnement (8) commandant la distribution de la boisson infusée dans la chambre d'infusion (5) dans le pot (7),
**caractérisé par** le mécanisme d'actionnement (8) comprenant
- un organe de sécurité (9) qui déclenche le mécanisme d'actionnement (8) lorsque la verseuse (7) est extraite du logement (6) afin d'empêcher la boisson de s'écouler de la chambre d'infusion (5) ;
- un élément de commande de débit (10) qui commande le débit de la boisson depuis la chambre d'infusion (5) ; un bras de mouvement (13) avec une extrémité reliée à l'élément de commande de débit (10) et l'autre extrémité à un moteur (11) et une came (12) ; un point de liaison (14) qui permet au bras de mouvement (13) de rester fixe sur le corps et d'effectuer un mouvement circulaire ; et l'organe de sécurité (9) qui permet au point de connexion (14) de se déplacer dans le plan vertical.

2. Une machine de préparation de boissons chaudes (1) selon la déclaration 1, est **caractérisée en ce qu'**une position ouverte dans laquelle le bras de mouvement (13) se déplace vers le haut avec le mouvement vers le haut de l'élément de sécurité (9) lorsque le pot (7) est sur le corps (2 ) et ainsi l'organe de commande de débit (10) se déplace dans la chambre d'infusion (5) afin de permettre à la boisson de s'écouler de la chambre d'infusion (5) dans le pot (7).

3. Une machine de préparation de boissons chaudes (1) selon l'une des déclarations précédentes, est **caractérisée en ce qu'**un ressort (15) soit agencé sur l'organe de commande de débit (10) et permettre à l'organe de sécurité (9) et au bras de déplacement (13 ) de se déplacer vers le bas lorsque le pot (7) n'est pas sur le corps (2), et une position fermée dans laquelle l'organe de commande de débit (10) se déplace vers le fond de la chambre d'infusion (5) de manière à interrompre le débit de la boisson dans la marmite (7).

4. Une machine de préparation de boissons chaudes (1) selon l'une des déclarations précédentes, est **caractérisée en ce que** l'élément de commande de débit (10) comporte un récipient (16), au moins une ouverture (17) agencée sur la base du récipient (16), et un bouchon (18) en contact perpendiculaire avec la base du récipient (16), et le mécanisme d'actionnement (8) comprenant un trou (20) ménagé sur la base de la chambre d'infusion (5) et à travers lequel le bouchon (18) passe.

5. Une machine de préparation de boissons chaudes (1) selon l'une des déclarations précédentes, est **caractérisée en ce que** le mécanisme d'actionnement (8) comprenne la came (12) tourne au moyen du moteur (11) pour permettre à l'élément de commande de débit (10) se déplacer dans le plan vertical au moyen du mouvement circulaire depuis le point de connexion (14) du bras de mouvement (13).

6. Une machine de préparation de boissons chaudes (1) selon l'une des déclarations précédentes, est **caractérisée en ce qu'**une unité de commande (19) permette à la boisson d'être infusée pendant une période de temps prédéterminée par le producteur et qui, à la fin de l'infusion procédé, permet d'alimenter la came (12) au moyen du moteur (11) de sorte que la boisson soit transférée dans le pot (7).

7. Une machine de préparation de boissons chaudes (1) selon l'une des déclarations précédentes, est **caractérisée en ce que** le mécanisme d'actionnement (8) comprend le bras de déplacement (13) dont une extrémité soit en forme de U.
